# EUROPEAN PATENT APPLICATION

(11) **EP 4 804 010 A1**
(43) Date of publication of application: **09.09.2026**
(21) Application number: 25161332.9
(22) Date of filing: 03.03.2025
(51) Int. Cl.: G06F 7/483, G06F 7/544

(54) **FLOATING-POINT MULTIPLIER ACCUMULATOR AND CORRESPONDING METHOD**

(71) Applicant: Euclyd B.V., 5656 AG Eindhoven (NL)
(72) Inventor: KASTRUP, Bernardo, 5656 AG Eindhoven (NL)
(74) Representative: V.O.

(57) **Abstract**

An improved floating-point multiplier accumulator, FP-multiplier accumulator, (2) is provided herein that comprises a multiplication pipeline (20) and an accumulation pipeline (22). The multiplication pipeline (20) has a first plurality of pipeline stages (201,...,205) for performing an FP multiplication of a first FP number and a second FP number. The accumulation pipeline (22) has a second plurality of pipeline stages (220,...,224) for performing an FP addition of a first FP multiplication result and a second FP multiplication result. The multiplication pipeline (20) is configured to store an FP multiplication result in a first accumulation pipeline input register (220A) in each first clock cycle and to store an FP multiplication result in a second accumulation pipeline input register (220B) in each second clock cycle and the accumulation pipeline being configured to start a new FP addition of the FP multiplication result in the first accumulation pipeline input register (220A) and in the second accumulation pipeline input register (220B) in each other clock cycle.

## Description

### BACKGROUND

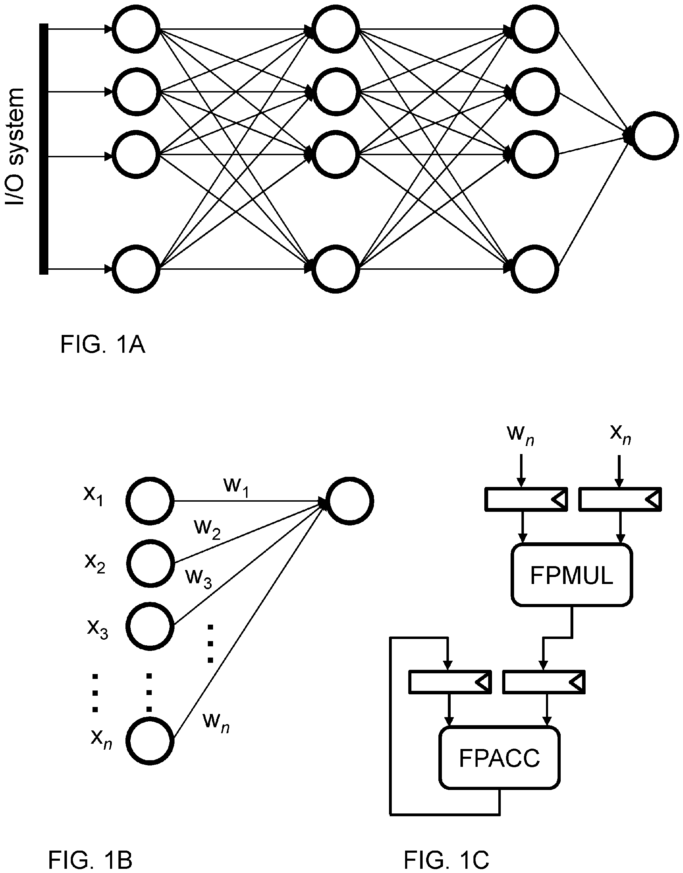

Neural Processing Units (NPUs) are programmable processors optimized for Artificial Neural Network (ANN) computations. FIG. 1A illustrates a four-layer ANN comprising several artificial neurons. In FIG 1A the neurons are indicated as circles and their interconnections are illustrated by arrows.

The main computation performed by a neuron is a so-called 'dot product,' as illustrated in FIG. 1B: a vector multiplication between an input data vector X and a weights vector W. Specifically, if X = [x₁, x₂, ..., xₙ] and W = [w₁, w₂, ..., wₙ], then the dot product X.W = x₁.w₁ + x₂.w₂ + ... + xₙ.wₙ. Efficient NPUs are optimized for performing dot products.

An NPU optimized for dot product computations ideally entails a data-path that performs such computations with minimal data communication, using short communication lines, as well as minimal bus and memory accesses, so to increase computation speed and reduce power dissipation. An example known in the art is shown in FIG. 1C: a floating-point multiplier unit (FPMUL) receives the components wₙ and xₙ from the weights vector W and the data vector X, respectively, and multiplies them. The resulting value then becomes one of the two inputs to a floating-point accumulator unit (FPACC), while the other input is coupled to the output of the FPACC, which contains the previously accumulated value.

A problem with the known approach in FIG. 1C is that it assumes both the FPMUL and the FPACC to not be pipelined, so that a full floating-point multiplication and a full floating-point accumulation are performed in a single clock cycle. Only in this way can the previous output of the FPACC unit become available at the very next clock cycle to be added to the latest output from the FPMUL unit.

The complexity of a floating-point multiplication and accumulation is such that, if they need to fit into a single clock cycle, the clock frequency will necessarily be limited to a fairly low value, consequently slowing down the entire system and defeating the goal of an efficient NPU. Instead, it is necessary to pipeline both the FPMUL and the FPACC as deeply as possible, so to increase the clock frequency and leverage parallelism across pipeline stages. This, however, means that, if the FPACC has n > 1 pipeline stages, it requires n clock cycles to complete any single accumulation. And since the next accumulation needs to wait until the previous one is completed (as per the scheme in FIG. 1C), the FPMUL has to remain idle for n - 1 clock cycles, waiting for the previous accumulation to complete. In a typical case where n = 4, this means that the FPMUL remains idle during 3 out of every 4 cycles (75% of the time!), which is, of course, highly inefficient.

### SUMMARY

It is an object of the present disclosure to provide means that enable a more efficient dot-product computation.

In accordance with a first aspect of the disclosure, this is achieved with an improved floating-point multiplier accumulator, also denoted herein as FP-multiplier accumulator.

Embodiments of the improved FP-multiplier accumulator comprise a multiplication pipeline and an accumulation pipeline.

The multiplication pipeline has a first plurality of pipeline stages for performing an FP-multiplication of a first FP-number and a second FP-number.

The accumulation pipeline has a second plurality of pipeline stages for performing an FP-addition of a first FP-multiplication result and a second FP-multiplication result.

The multiplication pipeline is configured to store an FP-multiplication result in a first accumulation pipeline register in each first clock cycle and to store an FP-multiplication result in a second accumulation pipeline register in each second clock cycle. The accumulation pipeline is configured to start a new FP-addition of the FP-multiplication result in the first accumulation pipeline register and in the second accumulation pipeline register in each other clock cycle.

The improved FP-multiplier accumulator is configured to perform all FP-multiplications of a dot product without idling, at the cost of the FPACC unit idling only 1 out of every 2 clock cycles, regardless of how deeply pipelined either unit is. This results in a vast improvement in speed (i.e., pipeline parallelism) compared to the prior art. Embodiments of the improved FP-multiplier accumulator also allow for most of the dot product computations to be performed along very short and local communication lines, with minimal control, avoiding buses and memory accesses most of the time, and thereby substantially reducing the associated power dissipation. The increase in parallelism and reduction in power dissipation translate into a more efficient NPU.

In an embodiment the FP-multiplier accumulator further comprises a scratchpad (preferably implemented as a memory) for temporarily storing the FP addition results provided by the accumulation pipeline and the accumulation pipeline is configured to subsequently receive the FP addition results back from the scratchpad and add them together.

In an embodiment the FP-addition results obtained by addition of the FP multiplication results form a set of intermediary accumulation results and the accumulation pipeline is configured to repeatedly perform the steps of adding a pair of intermediary accumulation results taken from the set of intermediary accumulation results and replacing the pair of intermediary accumulation results in the set of intermediary accumulation results with the FP accumulation result obtained by addition of the pair of intermediary accumulation results until a final accumulation result remains. Therewith the accumulation stage can be completed in about log₂ n steps. I.e. the first intermediary accumulation results in the set of intermediary accumulation results are the sum of two multiplication results. The second intermediate accumulation results, i.e. the sum of two first intermediary accumulation results, are the sum of four multiplication results. The third intermediate accumulation results are the sum of eight multiplication results, and so on.

In an embodiment the accumulation pipeline is configured to directly transfer one intermediary accumulation result of the pair of intermediary accumulation results from an output of the accumulation pipeline to one of the accumulation pipeline input registers and to retrieve the other intermediary accumulation result of the pair of intermediary accumulation results from the scratchpad. This shortcut contributes to a bus usage reduction.

In an embodiment a first input register and a second input register of the multiplication pipeline are respectively coupled to a first bus and a second bus that are configured to serve as a data bus. Therewith the multiplicand and the multiplier can be loaded in the same cycle. In one example thereof the first bus is coupled to a data port of a data memory that stores the weights and the second bus is coupled to a data port of an I/O interface. This facilitates computation of a dot product, wherein the weights of the dot product are retrieved from the data memory and the input data vector X is made available to the NPU by the I/O interface from an external data source (e.g., another data memory, another NPU, a host processor or CPU, electronic sensors, etc.). The data memory may be exclusively provided for this purpose or alternatively also be used for storage of other data. In an embodiment a third bus is provided that is both coupled to an address port of the weight memory and an address port of the I/O interface. Therewith an address from a register, or an address counter, or an address generator, etc., can simultaneously drive the weight memory and the I/O interface. This is efficient for performing a dot product computation, as the latter involves multiplication of respective pairs of a weight and an input value having the same index.

In an embodiment the floating-point multiplier accumulator has a fourth bus that serves as a data bus for transferring data from the accumulation pipeline output register to the scratchpad and a fifth bus that serves as an address bus coupled to an address port of the scratchpad. In this way the data transfer from the accumulation pipeline output register to the scratchpad can take place without interfering with the data transfer from the weights memory and the I/O interface to the multiplication pipeline input registers.

In an embodiment the third bus is also configured to serve as a data bus coupling a first data output port of the scratchpad with the first accumulation pipeline input register and the fourth bus is also configured to serve as a data bus coupling a second data output port of the scratchpad with the second accumulation pipeline input register. Therewith in the stage of accumulating the intermediate accumulation results each cycle a pair of intermediate accumulation results can be transferred in parallel from the scratchpad to both accumulation pipeline input registers. The third bus is efficiently used in this manner. Also a direct data transfer is possible from the accumulation pipeline output register to the second accumulation pipeline input register in parallel to a data transfer from the scratchpad to the first accumulation pipeline input register.

### BRIEF DESCRIPTION OF THE DRAWINGS

These and other aspects of the present disclosure are further elaborated with reference to the attached drawings. Therein:
FIG. 1A illustrates a four-layer ANN comprising several artificial neurons.
FIG. 1B schematically illustrates a dot product computation.
FIG. 1C schematically illustrates a conventional floating-point multiplier accumulator unit.
FIG. 2 schematically shows an embodiment of the improved floating-point multiplier accumulator according to the present disclosure.
FIG. 3A and 3B shows an example of the embodiment of FIG. 2 in more detail. Therein FIG. 3A shows a first part and FIG. 3B shows a second part.
FIG. 4A, 4B, 4C and 4D show representative operational stages of the improved floating-point multiplier accumulator as exemplified in FIG. 2, FIG. 3A and FIG. 3B.
FIG. 5 shows an alternative embodiment of the improved floating-point multiplier accumulator according to the present disclosure.
FIG. 6 shows a still further embodiment of the improved floating-point multiplier accumulator according to the present disclosure.
FIG. 6A shows an aspect of the embodiment in FIG. 6 in more detail.
FIG. 7A, 7B shows alternative solutions for coupling functional components to a common bus.

### DETAILED DESCRIPTION OF EMBODIMENTS

Like reference symbols in the various drawings indicate like elements unless otherwise indicated.

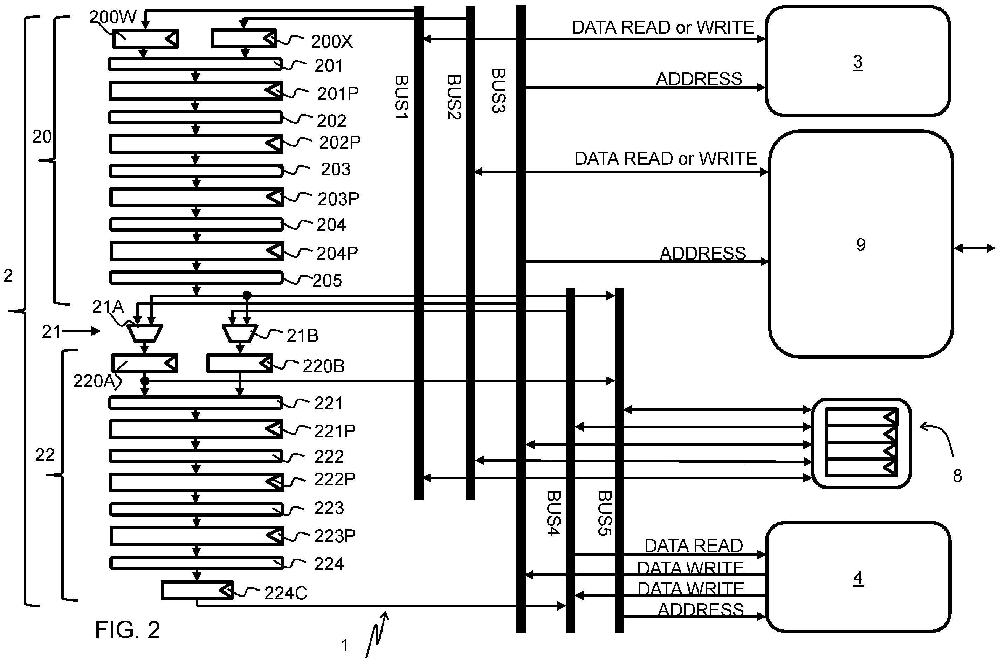

FIG. 2 schematically shows an embodiment of an improved floating-point multiplier accumulator 2 comprising a multiplication pipeline 20 and an accumulation pipeline 22 as described in more detail below. In the example shown in FIG. 2, the floating-point multiplier accumulator 2 is comprised as a dot product computation unit in a neural network processor 1. As shown therein, the floating-point multiplier accumulator 2 is coupled by buses BUS1 - BUS 5 to a scratch pad 4, a register file 8, an I/O interface 9 and a weights memory 3.

The multiplication pipeline 20 has a first plurality of pipeline stages 201,...,205 for performing a floating-point multiplication of a first number and a second number in registers 200W and 200X respectively. Each pipeline stage 201,...,204 has a respective pipeline stage register 201P,...,204P. The final pipeline stage 205 of the multiplication pipeline 20 does not have a proper pipeline stage register, but is configured to write its multiplication result directly into one of a first accumulation pipeline input register 220A and a second accumulation pipeline input register 220B as specified further below.

Likewise the accumulation pipeline 22 has a second plurality of pipeline stages 220,..., 224 for performing a floating-point addition of a first floating-point multiplication result in the first accumulation pipeline input register 220A and a second floating-point multiplication result in the second accumulation pipeline input register 220B. Likewise, each pipeline stage 221,...,224 has a respective pipeline stage register 221P,...,223P, 224C. The pipeline stage register 224C provides the (intermediate) accumulation result of the accumulation pipeline 22.

In operation, the multiplication pipeline 20 alternately stores a floating-point multiplication result in the first accumulation pipeline input register 220A and in the second accumulation pipeline input register 220B. Each other clock cycle, once the contents of both accumulation pipeline input registers 220A, 220B are refreshed, the accumulation pipeline 22 starts a new floating-point addition of the floating-point multiplication results in the first and the second accumulation pipeline input register 220A, 220B.

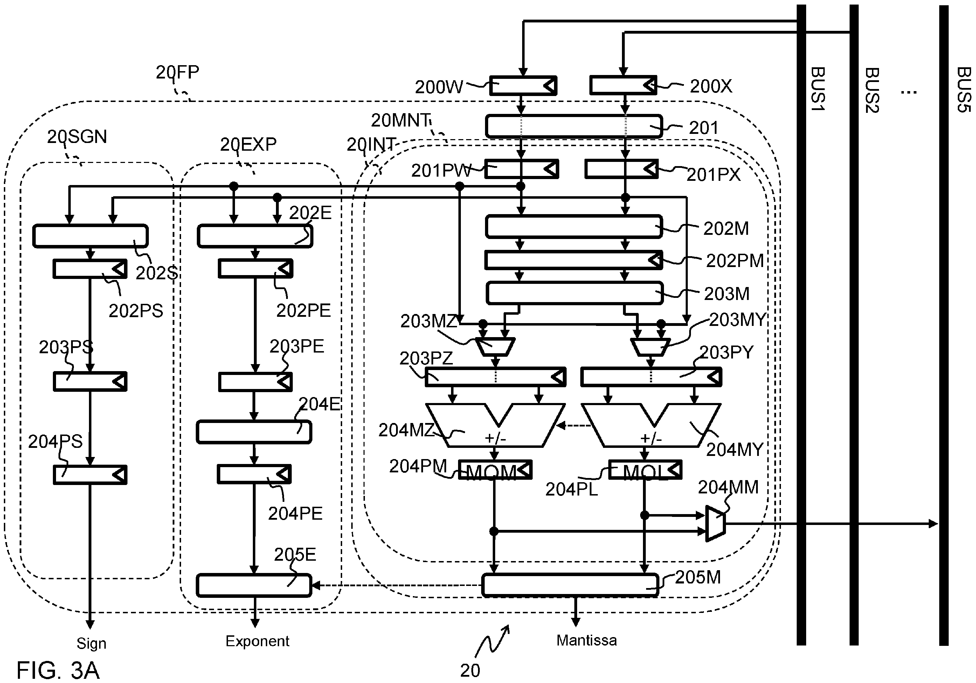

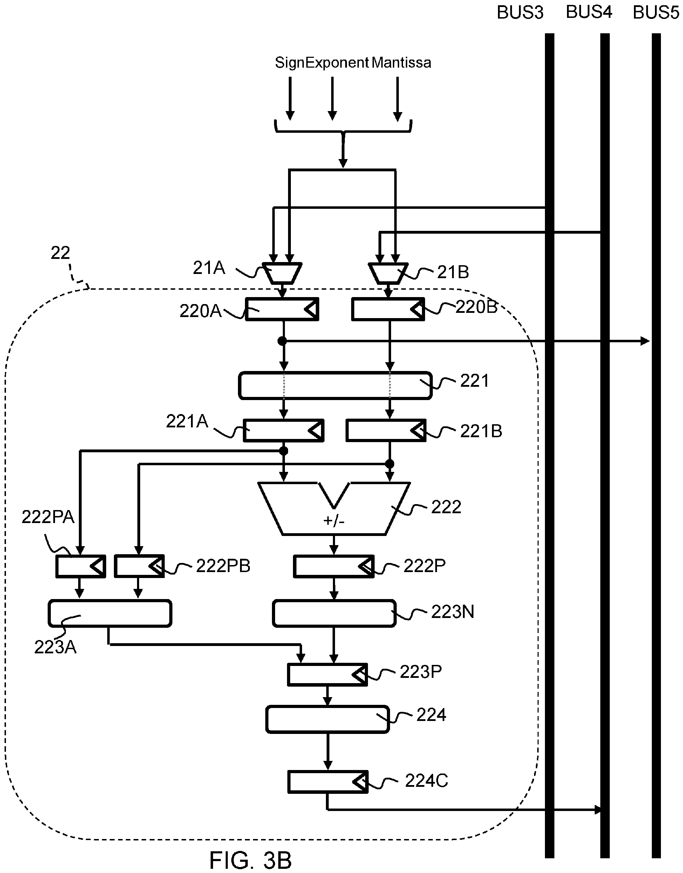

FIG. 3A and 3B illustrate a concrete and detailed embodiment of the scheme illustrated in FIG. 2. FIG. 3A shows the internal pipeline resources of the FPMUL 20. The contents of input registers 200W and 200X are loaded via buses BUS1 and BUS2 from the weights memory 3 and the I/O interface 9 respectively. A normality check is performed on these contents in pipeline stage 201 and, unless they are found to be subnormal, the contents are passed on to the pipeline registers 201PW and 201PX immediately below. From there, the computations are split across a sign processing section 20SGN, an exponents processing section 20EXP, and a mantissa processing section 20MNT that comprises an integer multiplication section 20INT followed by a rounding and normalization stage 205M.

In the example shown in FIG. 3A, the integer multiplication of the mantissas entered into the pipeline registers 201PW and 201PX is performed in the following pipeline stages: Booth recoding 202M followed by pipeline register 202PM, partial product reduction 203M followed by pipeline registers 203PZ and 203PY, and carry-propagate addition 204MZ and 204MY, e.g. two coupled ALUs or adders, of which the results are stored in pipeline registers 204PM and 204PL. The first mentioned stores the Multiplier Output Most significant half (MOM) and the second one stores Multiplier Output Least significant half (MOL).

The exponents processing section 20EXP in the example of FIG. 3 comprises an exponents addition stage 202E, an exponents re-biasing stage 204E, and an exponent normalization stage 205E that is coupled to the rounding and normalization stage 205M.

The sign processing section 20SGN only comprises a single stage 202S that computes the sign of the product of the operands supplied in the input registers 200W, 200X. FIG. 3A further shows the pipeline registers 202PE, 203PE and 204PE of the exponents processing section 20EXP and the pipeline registers 202PS, 203PS and 204PS of the sign processing section 20SGN to properly synchronize the operations in these sections with those of the mantissa processing section 20MNT.

In the example shown in FIG. 3A, the contents MOM, MOL of pipeline registers 204PM, 204PL can optionally be made available, via a multiplexer 204MM, to another internal bus of the NPU, namely BUS5. Therewith the components of the floating-point multiplier 20 enclosed by the dashed contour 20INT can be used as an integer multiplier. Either way, they are further processed for rounding and normalization in pipeline stage 205M.

As further shown in FIG. 3A, the contents of input registers 201PW and 201PX can optionally be forwarded directly to the input registers 203PZ and 203PY of the above-mentioned ALUs/adders 204MZ, 204MY. This renders it possible to use these ALUs/adders also for other general-purpose computations, not just as part of a floating-point multiplier.

As illustrated in FIG. 3B, when performing a dot product computation the resulting sign, exponent and mantissa that are computed by the FPMUL unit 20FP can be alternately stored in registers 220A and 220B, which serve as input registers to the FPACC unit shown in detail in the figure. Alternatively, these registers may be provided as part of the FPMUL unit 20FP. Nevertheless, they will be denoted as input registers of the floating point adder 22 as they in fact function as such.

In the example shown the floating-point adder 22 comprises a normality check stage 221. This stage copies the data in the registers 220A and 220B, if compliant with normality, in the pipeline registers 221A, 221B respectively. This data is added in accumulator 222 and the result is placed in pipeline register 222P. The exponents of the data in the pipeline registers 221A, 221B are copied in the pipeline registers 222PA, 222PB for alignment in exponent alignment stage 223A. In the same cycle the result stored in pipeline register 222P is normalized and the output of the stages 223A, 223N is combined in pipeline register 223P, for final rounding in stage 224. The result of the latter stage is then entered into output register 224C.

In the example shown in FIG. 3B, the registers 220A, 220B are coupled to a respective multiplexer 21A, 21B that each have a first input coupled to the output of the FPMUL unit 20 and a second input coupled to a respective bus BUS3, BUS4 respectively. This renders it possible that the same adder 22 can be used independently of the FPMUL unit 20, for example to subsequently accumulate the partial sums stored in the scratchpad 4.

As noted above, the improved FP-multiplier accumulator 2 is configured to perform all FP-multiplications of a dot product without idling, at the cost of the FPACC unit 22 idling only 1 out of every 2 clock cycles, regardless of how deeply pipelined either unit is. This is demonstrated with Table 1 for the embodiment of FIG. 2, 3A and 3B. In this example a dot product is computed of a vector W = (W1, W2,...,W18) and a vector X = (X1, X2, ..., X18).

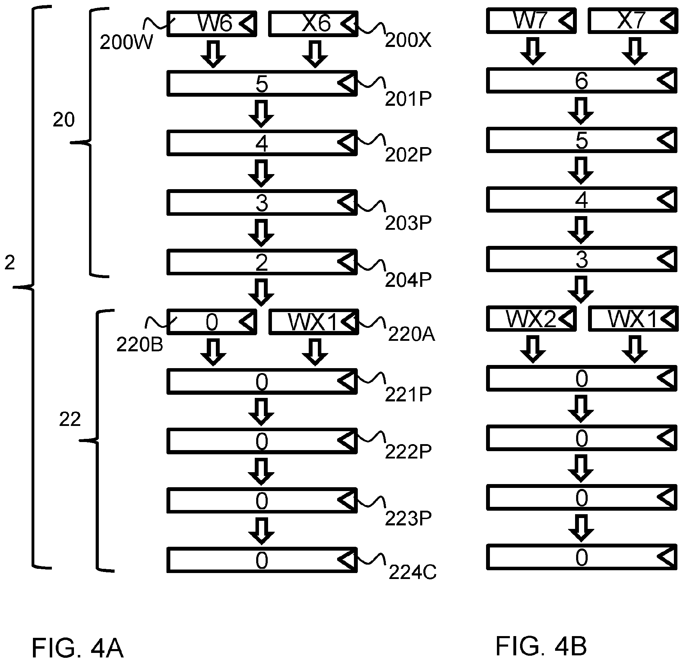

Therein the left column indicates the cycle, and the contents of the pipeline registers 200W, 200X, 220A, 220B and 224C are shown in the subsequent five columns. The occupancy of the buses BUS1,...,BUS5 is shown in the last five columns. Representative stages of the computation are shown in FIG. 4A - 4D. For clarity these figures do not show the pipelines in full detail. Only the pipeline registers are shown. Furthermore, the pipeline registers are shown in a simplified manner. That is, apart from some exceptions, for each stage in the pipeline a single pipeline register is shown. For example, register 203P in FIG. 4A - 4D represents the registers 203PS, 203PE, 203PZ and 203PY in FIG. 3A.

FIG. 4A shows the situation in cycle 6. In this cycle the FPMUL 20 has completed the computation of the product W1*X1 and placed the result, indicated as WX1, in pipeline register 220A, which in this example is the first input register of the FPADD 22. It can also be seen that, in cycle 6, the operands W6 and X6 are loaded into input registers 200W and 200X respectively. Also it is shown that the FPMUL 20 has stored intermediary results for the computation of the product of the pair W5 and X5, indicated as '5' in pipeline register 201P, intermediary results for the computation of the product of the pair W4 and X4, indicated as '4' in pipeline register 202P, intermediary results for the computation of the product of the pair W3 and X3, indicated as '3' in pipeline register 203P, and intermediary results for the computation of the product of the pair W2 and X2, indicated as '2' in pipeline register 204P.

FIG. 4B shows the state in cycle 7. In this cycle the FPMUL 20 has completed the computation of the product W2*X2 and placed the result, indicated as WX2, in pipeline register 220B, which in this example is the second input register of the FPADD 22. In the next cycle the FPADD starts a floating-point addition operation, adding the FP multiplication result WX1 in the first accumulation pipeline input register 220A and the FP multiplication result WX2 in the second accumulation pipeline input register 220B. A new floating-point addition operation starts in each other clock cycle.

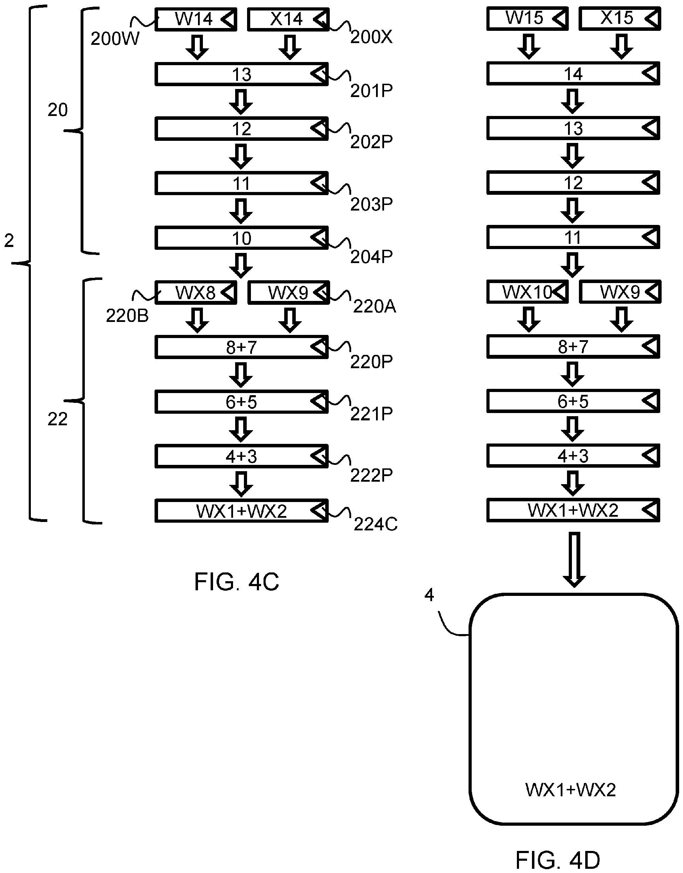

FIG. 4C shows the state in cycle 14, wherein the FPADD has completed the intermediary accumulation for these two products WX1, WX2 and placed the intermediary accumulation result denoted as WX1+WX2 into its output register 224C.

In cycle 15, as shown in FIG. 4D, the intermediary accumulation result is loaded into the scratchpad 4. As shown in table 1, the FPMUL 20 has completed its computations in cycle 23. Subsequent to that cycle, the FPADD 22 is ready to accept intermediary accumulation results from the scratchpad 4 in its input registers 220A, 220B, adding them together until only the final accumulation result remains. Therewith the accumulation pipeline 22 repeatedly performs the steps of adding a pair of intermediary accumulation results taken from the set of intermediary accumulation results and replaces the pair of intermediary accumulation results in the set of intermediary accumulation results with the FP accumulation result obtained by addition of the pair of intermediary accumulation results until only a final accumulation result remains. Therewith the accumulation stage can be completed in about log₂ n steps. I.e. the first intermediary accumulation results in the set of intermediary accumulation results are the sum of two multiplication results, i.e. WX1+WX2, WX3+WX4, .... The second intermediate accumulation results, i.e. the sum of two first intermediary accumulation results, are the sum of four multiplication results WX1+WX2+WX3+WX4, etc. The third intermediate accumulation results are the sum of eight multiplication results, and so on. In this embodiment the accumulator typically requires 3 cycles per addition of a pair of intermediate accumulation results: one for loading the first input register 220A from the scratchpad 4, one for loading the second input register 220B from the scratchpad 4, and one for writing a new accumulation result from its output register 224C into the scratchpad. In some cases, the scratchpad can be bypassed by directly transferring the accumulation result from output register 224C into input register 220B via BUS4 (See FIG. 3B).

**Table 1: Operational states of the FP multiplier accumulator 2.**

| Cycle | 200W | 200X | 220A | 220B | 224C | BUS1 | BUS2 | BUS3 | BUS4 | BUS5 |
|---|---|---|---|---|---|---|---|---|---|---|
| 1 | W1 | X1 | | | | W1 | X1 | A1 | | |
| 2 | W2 | X2 | | | | W2 | X2 | A2 | | |
| 3 | W3 | X3 | | | | W3 | X3 | A3 | | |
| 4 | W4 | X4 | | | | W4 | X4 | A4 | | |
| 5 | W5 | X5 | | | | W5 | X5 | A5 | | |
| 6 | W6 | X6 | WX1 | | | W6 | X6 | A6 | | |
| 7 | W7 | X7 | | WX2 | | W7 | X7 | A7 | | |
| 8 | W8 | X8 | WX3 | | | W8 | X8 | A8 | | |
| 9 | W9 | X9 | | WX4 | | W9 | X9 | A9 | | |
| 10 | W10 | X10 | WX5 | | | W10 | X10 | A10 | | |
| 11 | W11 | X11 | | WX6 | | W11 | X11 | A11 | | |
| 12 | W12 | X12 | WX7 | | | W12 | X12 | A12 | | |
| 13 | W13 | X13 | | WX8 | | W13 | X13 | A13 | | |
| 14 | W14 | X14 | WX9 | | WX1+WX2 | W14 | X14 | A14 | | |
| 15 | W15 | X15 | | WX10 | | W15 | X15 | A15 | WX1+WX2 | AS1 |
| 16 | W16 | X16 | WX11 | | WX3+WX4 | W16 | X16 | A16 | | |
| 17 | W17 | X17 | | WX12 | | W17 | X17 | A17 | WX3+WX4 | AS2 |
| 18 | W18 | X18 | WX13 | | WX5+WX6 | W18 | X18 | A18 | | |
| 19 | | | | WX14 | | | | | WX5+WX6 | AS3 |
| 20 | | | WX15 | | WX7+WX8 | | | | | |
| 21 | | | | WX16 | | | | | WX7+WX8 | AS4 |
| 22 | | | WX17 | | WX9+WX10 | | | | | |
| 23 | | | | WX18 | | | | | WX9+WX10 | AS5 |
| 24 | | | | | WX11+WX12 | | | | | |
| 25 | | | | | | | | | WX11+WX12 | AS6 |
| 26 | | | | | WX13+WX14 | | | | | |
| 27 | | | | | | | | | WX13+WX14 | AS7 |
| 28 | | | | | WX15+WX16 | | | | | |
| 29 | | | | | | | | | WX15+WX16 | AS8 |
| 30 | | | | | WX17+WX18 | | | | | |
| 31 | | | | | | | | | WX17+WX18 | AS9 |

In the embodiment shown in FIG. 2 the first input register 200W and the second input register 200X of the multiplication pipeline 20 are respectively coupled to a first bus BUS1 and a second bus BUS2 that are configured to serve as a data bus. Therewith the first and the second multiplicand can be loaded in the same cycle. In this example the first bus BUS1 is coupled to a data port of the data memory 3 that stores the weights and the second bus BUS2 is coupled to a data port of the I/O interface 9. This facilitates computation of a dot product, wherein the weights of the dot product are retrieved from the data memory 3 and the input data vector X are made available to the NPU by the I/O interface 9 from an external data source (e.g., another data memory, another NPU, a host processor or CPU, electronic sensors, etc.). The data memory 3 may be exclusively provided for this purpose, as in this example, or alternatively may also be used for storage of other data. In this example a third bus BUS3 is provided that is both coupled to an address port of the weight memory 3 and an address port of the I/O interface 9. Therewith an address generator can simultaneously drive the weight memory 3 and the I/O interface 9. This is efficient for performing a dot product computation, as the latter involves multiplication of respective pairs of a weight and an input value having the same index.

In the example of FIG. 2, the floating-point multiplier accumulator has a fourth bus BUS4 that serves as a data bus for transferring data from the accumulation pipeline output register 224C to the scratchpad 4 and a fifth bus BUS5 that serves as an address bus coupled to an address port of the scratchpad 4. In this way the data transfer from the accumulation pipeline output register 224C to the scratchpad 4 can take place without interfering with the data transfer from the weights memory 3 and the I/O interface 9 to the multiplication pipeline input registers 200W, 200X.

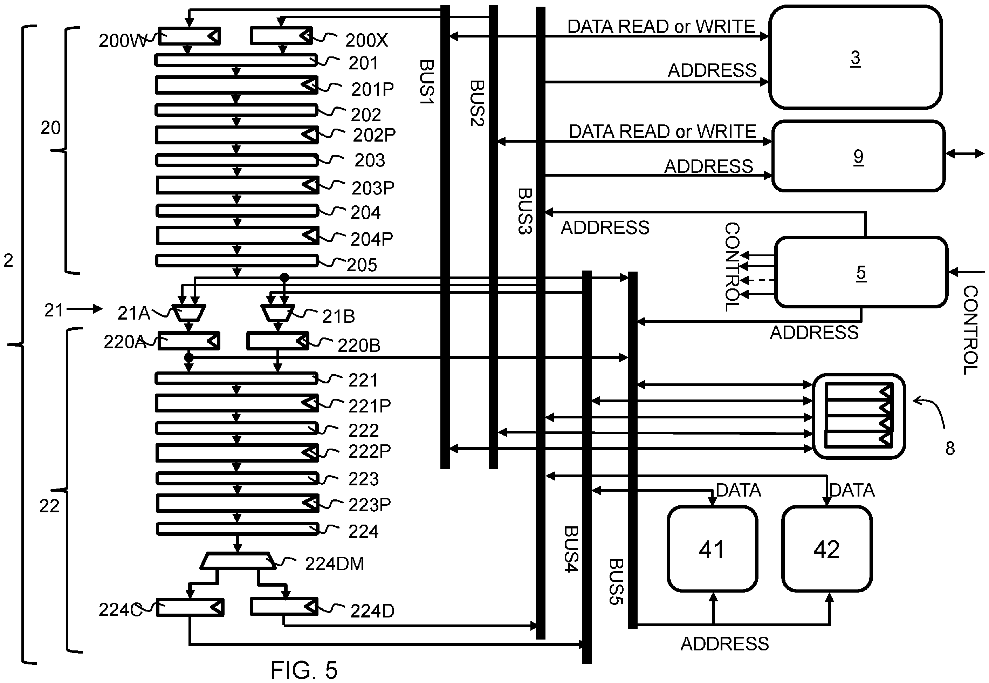

FIG. 5 shows an alternative embodiment that differs from the embodiment in FIG. 2, 3A and 3B in that the FPACC 22 has a first and a second output register, 224C and 224D respectively. Also the scratchpad now comprises a pair of scratchpad memories 41 and 42 having a respective data port coupled to a respective one of buses BUS3 and BUS4, but being coupled to the same address bus BUS5. In operation the FPACC 22 alternately places its output result in its first output register 224C and in its second output register 224D. When an accumulation result has been placed in each of registers 224C, 224D the result in register 224C is transferred to scratchpad memory 41 and the result in register 224D to scratchpad memory 42 in a single cycle. When the FPACC 22 starts to accumulate the intermediary accumulation results, a single cycle suffices to load an intermediary accumulation result from the first scratchpad memory 41 into input register 220B and another intermediary accumulation result from the second scratchpad memory 42 into input register 220A. Therewith the final accumulation stage can be accelerated. The scratchpad 4 in the embodiment of FIG. 2 and the 5 are typically provided as a random access memory RAM, e.g. as an SRAM. Alternatively it may be contemplated to replace the RAM by a FIFO-memory. In the accumulation stage this would have the advantage that it is possible to simultaneously store an intermediate accumulation result at the FIFO input and to read a stored intermediate accumulation at the FIFO-output. This would also be possible with a two-port memory, however contrary to a two-port memory, a FIFO can have a simple VLSI implementation. A disadvantage of the scratchpad implementation as a FIFO is however its lack of flexibility. I.e. it cannot be used for storage of other data.

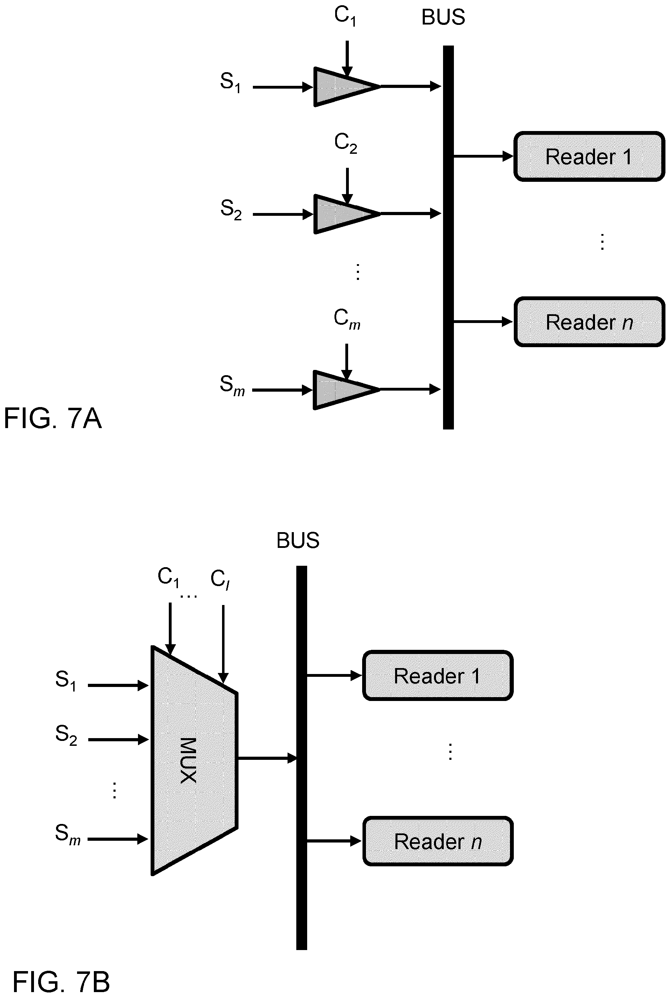

In the embodiment shown in FIG. 5 a controller 5 is provided that serves as an address generator to generate the address on BUS3 for the address port of weight memory 3 and the address input of the I/O interface 9. The controller 5 also generates the address on BUS5 for the address port of the scratchpads 41, 42. The controller 5 may operate in response to control signals from an instruction decoder, thereby being controllable by software. For example, the controller 5 may be provided with an address counter that, in response to one or more decoded instructions, issues a sequence of addresses in a range specified in the instructions. In the embodiment shown the controller 5 is further configured to control access to the buses BUS1 to BUS5 (See also FIG. 7A, 7B and the description) and to provide selection signals to the multiplexers 21A, 21B and demultiplexer 224DM.

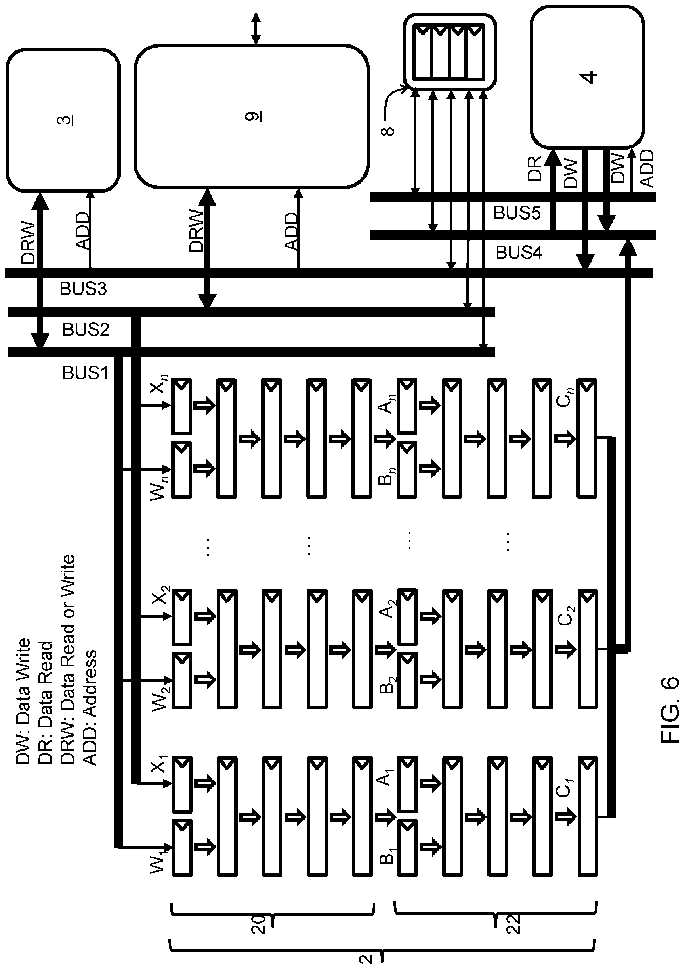

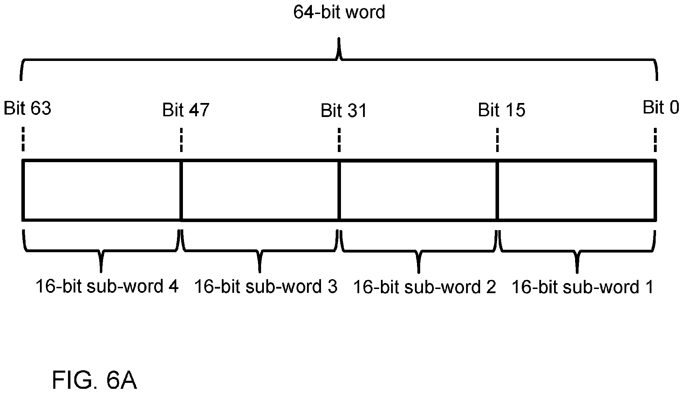

FIG. 6 shows a further embodiment based on the recognition that, in applications areas such as Large Language Models (LLMs), the components of the vectors W and X are typically only half-precision floating-point numbers (i.e., they require only 16 bits to be represented). However, advanced VLSI CMOS technology allows for efficient data memories, I/O interfaces and buses that can easily be 64-bits wide or even wider. Therefore, taking 64 and 16 bits as representative example bit-widths, a typical VLSI CMOS implementation of the foregoing scheme could allow for 4 vector components to be represented together in a single memory, I/O and bus word. See FIG 6A. In the case of 128-bit data words, even 8 vector components can be represented together in a single word. This opens up the opportunity for exploiting Single-Instruction-Multiple-Data (SIMD) parallelism with very little complexity added to the data-path scheme already discussed, as illustrated in FIG. 6. In the embodiment of FIG. 6 the floating-point multiplier accumulator 2 comprises n identical pipelines of the type shown in FIG. 2, 3A, 3B, or alternatively of the type shown in FIG. 5.

In the embodiment of FIG. 6 a single 64- or 128-bit data word can be loaded, in parallel, into the input registers of multiple FPMUL units concurrently, through a single bus transaction. Each set of Wn/Xn input registers can be loaded with a certain non-overlapping range of bits of the data word, as shown in FIG. 6A. This allows for multiple floating-point multiply-accumulate data-paths to operate in parallel. Their respective results are then collated together, according to their assigned non-overlapping bit ranges, into a word that is then written back to data or scratchpad memory, representing multiple partial accumulations in parallel. Therewith a significant improvement in efficiency is achieved.

The internal NPU buses BUS1, BUS2, BUS3, BUS4 and BUS5 can be implemented either with controllable tristate buffers (as shown in FIG. 7A) or controllable multiplexers (as shown in FIG. 7B).

In the first case (FIG. 7A), each tristate buffer has one control signal of 1 bit-namely, C1, C2, ..., Cm-which, when active, enables the buffer and drives the respective input Sm into the bus. When inactive, the control signal Cm tri-states the respective buffer (i.e., brings the output of the buffer to a high-impedance state), effectively disconnecting its input from the bus. To correctly implement the bus, the designer ensures that only one of the driving tristate buffers is enabled at any one time, all the others being in a high-impedance state. Multiple readers can then read out the value currently being driven into the bus by the one enabled tristate buffer.

In the second case (FIG. 7B), the inputs S1 to Sm are inputs to a multiplexer controlled by control signals C1 to Cl. The combination of bits in the control signals then selects one of the inputs Sm to drive the bus with.

In the present disclosure, it is preferred that buses BUS1,...,BUS5 be implemented through multiplexers, as illustrated in FIG. 7B. In the first place, multiplexers are easier to implement in VLSI CMOS process technology then tristate buffers. In the second place, the number of control inputs C1 to Cl required by a multiplexer with a given number of inputs is lower than the number of control signals C1 to Cm required to control the same number of tristate buffers. For instance, if there are 16 inputs that can drive the bus, a tristate buffer implementation requires 16 control signals, while a multiplexer implementation requires only 4 control signals (2⁴ = 16). In other words, l < m.

It is noted that, although the subsequent accumulation passes do use the scratchpad and the associated buses, the first partial accumulations (i.e. those of multiplication results) themselves are all calculated and communicated locally, as the operands trickle down an optimized pipeline, which significantly increases efficiency when compared to prior art schemes (such as GPUs) that use data memory and data buses for everything. The use of these buses implies switching the large parasitic capacitances of loaded buses. The customized multiplication accumulation pipeline as disclosed herein is substantially more power efficient due to the short, dedicated data paths between mutually subsequent processing pipeline stages.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. A floating-point multiplier accumulator, FP-multiplier accumulator (2), comprising:
a multiplication pipeline (20) with a first plurality of pipeline stages (201,...,205) for performing an FP multiplication of a first FP number and a second FP number;
an accumulation pipeline (22) with a second plurality of pipeline stages (221,...,224) for performing an FP addition of a first FP multiplication result and a second FP multiplication result;
the multiplication pipeline (20) being configured to store an FP multiplication result in a first accumulation pipeline input register (220A) in each first clock cycle and to store an FP multiplication result in a second accumulation pipeline input register (220B) in each second clock cycle and the accumulation pipeline being configured to start a new FP addition of the FP multiplication result in the first accumulation pipeline input register (220A) and in the second accumulation pipeline input register (220B) in each other clock cycle.

2. The FP multiplier accumulator (2) according to claim 1, further comprising a scratchpad (4) for temporarily storing the FP addition results provided by the accumulation pipeline (22), the accumulation pipeline being configured to subsequently receive said FP addition results back from the scratchpad (4) and accumulate all temporarily stored FP addition results to obtain a single FP accumulation result.

3. The FP multiplier accumulator (2) according to claim 2, wherein the FP addition results obtained by addition of the FP multiplication results form a set of intermediary accumulation results, wherein the accumulation pipeline (22) is configured to repeatedly perform the steps of adding a pair of intermediary accumulation results taken from the set of intermediary accumulation results and replacing the pair of intermediary accumulation results in the set of intermediary accumulation results with the FP accumulation result obtained by addition of the pair of intermediary accumulation results until only a final accumulation result remains.

4. The FP multiplier accumulator (2) according to claim 3, wherein the accumulation pipeline (22) is configured to directly transfer one intermediary accumulation result of the pair of intermediary accumulation results from an output of the accumulation pipeline (22) to an accumulation pipeline input register (220B) and to retrieve the other intermediary accumulation result of the pair of intermediary accumulation results from the scratchpad (4).

5. The FP multiplier accumulator (2) according to claim 2, wherein a first input register (200W) and a second input register (200X) of the multiplication pipeline (20) are respectively coupled to a first data bus (BUS1) and a second data bus (BUS2) .

6. The FP multiplier accumulator (2) according to claim 5, wherein the first data bus (BUS1) is coupled to a weights memory (3) and the second data bus (BUS2) is coupled to an I/O interface (9).

7. The FP multiplier accumulator (2) according to claim 5 or 6, comprising a third bus (BUS3) for addressing the weights memory (3) and the I/O interface (9) simultaneously and with the same address.

8. The FP multiplier accumulator (2) according to claim 7, wherein the third bus (BUS3) is driven from a register file (8).

9. The FP multiplier accumulator (2) according to claim 7, wherein the third bus (BUS3) is driven by an address counter.

10. The FP multiplier accumulator (2) according to claim 7, 8 or 9, further comprising a fourth bus (BUS4) that serves as a data bus for transferring data from the accumulation pipeline output register (224C) to the scratchpad (4) and a fifth bus (BUS5) that serves as an address bus coupled to an address port of the scratchpad (4).

11. The FP multiplier accumulator (2) according to any of claims 7-10, wherein an output of a carry-propagate addition pipeline stage (204) of the multiplication pipeline (20) is coupled to one of the buses (BUS1-BUS5).

12. The FP multiplier accumulator (2) according to any of the preceding claims, wherein the multiplication pipeline (20) is configured to bypass data at its inputs to inputs of a carry-propagate addition pipeline stage (204) of the multiplication pipeline.

13. The FP multiplier accumulator (2) according to any of the preceding claims, wherein inputs to the buses (BUS1 - BUS5) are driven by a respective multiplexer.

14. The FP multiplier accumulator (2) according to any of the preceding claims, wherein
the accumulation pipeline (22) comprises a pair of scratchpad memories (41, 42), each with a respective data port and sharing a common address bus (BUS5),
the accumulation pipeline (22) further comprises a first and a second output register (224C, 224D) which are coupled to a respective one of the data ports,
each data port is coupled to a respective one of the input registers (220A, 220B) of the accumulation pipeline (22),
the accumulation pipeline (22) being configured to
alternately place its output result in its first output register (224C) and in its second output register (224D),
simultaneously transfer the result in each output register (224C, 224D) to its respective scratchpad memory (41, 42) once an accumulation result has been placed in each of said output registers (224C, 224D), and
simultaneously load an intermediary accumulation result into each of its input registers (220A, 220B) from the respective scratchpad memory (41, 42) coupled thereto.

15. A neural network data processor, NN-data processor (1), comprising at least one FP multiplier accumulator (2) as specified in any of the preceding claims.

16. The neural network data processor, NN-data processor (1) according to claim 15, wherein the at least one FP multiplier accumulator (2) is one of a plurality of FP multiplier accumulators and wherein the NN-data processor is configured to provide the FP multiplier accumulators with respective first FP numbers from respective, mutually distinct bit ranges in a first data word and with respective second FP numbers from respective, mutually distinct bit ranges in a second data word and to collate respective outputs of the FP multiplier accumulators in mutually distinct bit ranges in a third data word.
